# EUROPÄISCHE PATENTSCHRIFT

(11) **EP 4 061 537 B1**
(45) Veröffentlichungstag und Bekanntmachung des Hinweises auf die Patenterteilung: **08.04.2026**
(21) Anmeldenummer: 20804263.0
(22) Anmeldetag: 10.11.2020
(51) Int. Cl.: G01M 13/00, B04B 1/10, B04B 7/06, B04B 11/04, B04B 13/00

(54) **DÜSENÜBERWACHUNGSVORRICHTUNG FÜR EINE DÜSENZENTRIFUGE, DÜSENZENTRIFUGE, UND VERFAHREN ZUM ÜBERWACHEN VON DÜSEN EINER DÜSENZENTRIFUGE**
NOZZLE MONITORING DEVICE FOR A NOZZLE CENTRIFUGE, NOZZLE CENTRIFUGE, AND METHOD FOR MONITORING NOZZLES OF A NOZZLE CENTRIFUGE
DISPOSITIF DE SURVEILLANCE DE BUSE CONÇU POUR UNE CENTRIFUGEUSE À BUSES, CENTRIFUGEUSE À BUSES ET PROCÉDÉ POUR SURVEILLER DES BUSES D'UNE CENTRIFUGEUSE À BUSES

(30) Priorität: 21.11.2019 DE 102019131509
(43) Veröffentlichungstag der Anmeldung: 28.09.2022
(73) Patentinhaber: GEA Mechanical Equipment GmbH, 59302 Oelde (DE)
(72) Erfinder: KRAUS, Alexander, 59302 Oelde (DE); GÖHMANN, Rüdiger, 59302 Oelde (DE)
(74) Vertreter: Specht, Peter
(86) Internationale Anmeldenummer: PCT/EP2020/081618
(87) Internationale Veröffentlichungsnummer: WO 2021/099182

(56) Entgegenhaltungen:
- EP-A1- 2 835 178
- EP-A1- 3 260 205
- WO-A1-2009/137480
- WO-A1-2011/081531
- US-A- 4 740 077

## Beschreibung

Die Erfindung betrifft eine Düsenzentrifuge mit einer Düsenüberwachungsvorrichtung nach dem Oberbegriff des Anspruchs 1. Die Erfindung bezieht sich auch auf ein Verfahren zum Überwachen von Düsen einer Düsenzentrifuge.

Derartige Düsenzentrifugen sind beispielsweise Tellerseparatoren mit Düsen in der Peripherie der Trommel. Diese Düsenzentrifugen klären Feststoffe oder trennen zwei Flüssigphasen und gegebenenfalls Feststoffe aus einer 3-Phasen-Suspension, welche aufkonzentriert durch die Düsen kontinuierlich ausgetragen werden. Düsenzentrifugen sind hervorragend geeignet, vergleichsweise hohe Feststoffkonzentrationen im Zulaufstrom zu verarbeiten. Diese Düsenzentrifugen sind vergleichsweise robust und weisen eine sehr gute Klärung auf Grund der Strömungsverhältnisse auf. Eine große potentielle Schwachstelle bei allen Düsenzentrifugen ist jedoch die Gefahr der Düsenverstopfung. Zudem gibt es Prozesse, bei welchen der Düsendurchmesser durch Abrasion größer wird und dadurch die Trenn-/Klärergebnisse schlechter werden.

Zur Erkennung verstopfter Düsen gibt es verschiedene Lösungsvorschläge.

Die Vibration der Gesamtmaschine kann überwacht werden. Bei der Verstopfung einer Düse und der sich hierdurch ausbildender Unwucht wird diese durch einen Messsensor erkannt. Es ist allerdings nicht möglich, die genaue Position der verstopften Düse innerhalb der Trommel zu bestimmen.

Weiterhin gibt es Sensoren, welche im Bereich eines Düsenstrahls positioniert sind und in Verbindung mit einer Synchronisierung der Trommeldrehzahl stehen, wobei die genaue Lage einer verstopften Düse erkennbar ist.

Das Dokument EP 3 260 205 A1 beschreibt eine Sensorvorrichtung für einen Zentrifugalabscheider mit einem stationären Gehäuse und einem Zentrifugalrotor, der im stationären Gehäuse vorgesehen und um eine Drehachse mit einer Drehgeschwindigkeit drehbar angeordnet ist und eine Vielzahl von Düsen zum Austragen eines Produkts aus dem Zentrifugalrotor umfasst. Die Sensorvorrichtung umfasst ein Übertragungselement, das einen ersten Teil und einen zweiten Teil aufweist, und das so konfiguriert ist, dass es so montiert werden kann, dass sich der erste Teil innerhalb des stationären Gehäuses (2) und außerhalb des Zentrifugenrotors befindet, und dass sich der zweite Teil außerhalb des stationären Gehäuses befindet. Mindestens der erste Teil des Übertragungselements weist eine längliche Form auf, ein Aufnahmekopf, der durch den ersten Teil des Übertragungselements gebildet wird. Die Sensorvorrichtung umfasst ferner ein Sensorelement, das an dem zweiten Teil des Übertragungselementes montiert und konfiguriert ist, um Vibrationen und/oder Stoßimpulse zu erfassen, die sich vom Empfangskopf zum Sensorelement ausbreiten, und eine Auswerteeinheit, die mit dem Sensorelement zum Übertragen von Signalen vom Sensorelement zur Auswerteeinheit verbunden ist. Das Übertragungselement ist im stationären Gehäuse montiert, das so ausgerichtet ist, dass die Stirnseite des Aufnahmekopfes während der Drehung des Rotors den durchgehenden Strahlen der Düsen zugewandt ist. Ein Zentrifugen Messsystem ist beispielsweise aus dem Dokument US-A-4 740 077 auch bekannt.

Die Erfindung hat die Aufgabe, eine verbesserte Düsenüberwachungsvorrichtung zu schaffen, wobei eine Verstopfung und eine Teilverstopfung einer oder mehrerer Düsen einfach erkennbar ist.

Eine weitere Aufgabe besteht darin, eine verbesserte Düsenzentrifuge bereitzustellen.

Eine noch weitere Aufgabe ist es, ein verbessertes Verfahren zum Überwachen von Düsen einer Düsenzentrifuge anzugeben.

Die Erfindung löst diese Aufgaben durch die Gegenstände der Ansprüche 1, und 13.

Mittels dieser Überwachungsvorrichtung kann vorteilhaft eine verstopfte oder teilverstopfte Düse erkannt werden. Zudem kann auch eine Düsendurchmesservergrößerung erkannt werden. Ein besonderer Vorteil besteht darin, dass die Überwachungsvorrichtung ein optischer Düsenmonitor ist und somit berührungslos arbeitet.

Eine erfindungsgemäße Düsenzentrifuge, insbesondere Düsenseparator, umfasst ein Gehäuse, in welchem eine Trommel, die eine definierte Anzahl von Düsen an einer Peripherie der Trommel aufweist, drehbar um eine vertikale Drehachse angeordnet ist, und eine Düsenüberwachungsvorrichtung, wobei mindestens ein Abschnitt der Düsenüberwachungsvorrichtung mit einem Innenraum des Gehäuses in Kontakt steht. Die Düsenüberwachungsvorrichtung ist oben angegeben.

Vorteilhaft hierbei ist, dass die Düsenüberwachungsvorrichtung als eine kompakte Einheit zwar mit dem Innenraum des Gehäuses in Kontakt steht, aber im Gegensatz zum Stand der Technik nicht von einem Düsenstrahl berührt bzw. verschmutzt wird.

Ein erfindungsgemäßes Verfahren zum Überwachen von Düsen einer Düsenzentrifuge mit einer Düsenüberwachungsvorrichtung wird geschaffen, wobei die Düsenzentrifuge ein Gehäuse, in welchem eine Trommel, die eine definierte Anzahl von Düsen an einer Peripherie der Trommel aufweist, drehbar um eine vertikale Drehachse angeordnet ist, wobei ein Stroboskop, eine Kamera und eine Beleuchtung derart in einer Überwachungskammer angeordnet sind, dass sie auf die Peripherie der Trommel mit den Düsen gerichtet sind. Das Verfahren umfasst die Verfahrensschritte (S1) Aussenden von Lichtimpulsen von dem Stroboskop auf die Peripherie der rotierende Trommel mit den Düsen und Einstellen der Frequenz der Lichtimpulse anhand einer Drehfrequenz der Trommel und Synchronisieren mit dieser; (S2) Erfassen einer synchronisierten und somit scheinbar stehenden Bildfolge der Trommel einschließlich eines jeweiligen Düsenstrahls der zugehörigen Düse mittels der Kamera; und (S3) Vergleichen der von der Kamera erfassten Bildfolgen mit vorher gespeicherten Bildfolgen und Auswerten der erfassten Bildfolge anhand des Vergleichens zum Überwachen der Düse.

Anstelle von Bildfolgen können auch Einzelbilder verwendet werden.

Damit wird ein vorteilhaft berührungsloses optisches Überwachen der Düsen ermöglicht.

Weitere vorteilhafte Ausbildungen der Erfindung sind Gegenstände der Unteransprüche.

In einer Ausführung weist die Düsenüberwachungsvorrichtung eine Beleuchtung auf. Damit können die Umgebungsbedingungen Helligkeit und Erkennbarkeit in dem zu erfassenden Bereich auf einfache Weise verbessert werden.

Eine weitere Ausführung sieht vor, dass die Düsenüberwachungsvorrichtung ein Schauglas aufweist. Damit kann ein vorteilhafter Schutz der Düsenüberwachungsvorrichtung vor Verschmutzung erreicht werden.

Eine vorteilhaft abgeschlossene Einheit kann einerseits dadurch gebildet sein, wenn das mindestens eine Stroboskop, die mindestens eine Kamera und die Beleuchtung in einer Überwachungskammer angebracht sind, und andererseits wenn das mindestens eine Stroboskop, die mindestens eine Kamera und die Beleuchtung in einer Überwachungskammer über dem Schauglas angeordnet sind, wobei das Schauglas in einer Öffnung der Überwachungskammer angebracht ist.

Dabei kann es in einer alternativen Ausführung von Vorteil sein, dass die mindestens eine Kamera und die Beleuchtung in einer Überwachungskammer über dem Schauglas angeordnet sind, wobei das Schauglas in einer Öffnung der Überwachungskammer angebracht ist, und wobei das mindestens eine Stroboskop außerhalb der Überwachungskammer angeordnet ist, da auf diese Weise Blendwirkungen des Schauglases ausgeschlossen werden können.

In einer weiteren Ausführung ist das Schauglas als ein rotierendes Schauglas mit einem Schauglasantrieb ausgebildet. Dies ist vorteilhaft, da somit Verschmutzungen durch Spritzer u.dgl. verhindert werden können und immer eine saubere Außenseite des Schauglases gewährleistet ist.

Eine noch weitere Ausführung sieht vor, dass die Steuereinheit der Düsenüberwachungsvorrichtung den Schauglasantrieb, das mindestens eine Stroboskop, die mindestens eine Kamera und die Beleuchtung steuert. Dies ergibt eine kompakte Einheit, wobei die Steuereinheit eine zusammenhängende Software zur Steuerung aufweisen kann, die aufgrund der Kompaktheit der Programmschritte schnell ist.

In einer Ausführung ist die mindestens eine Kamera mit einer Auswertung der Steuereinheit verbunden, wobei die Auswertung mittels einer bilderkennenden Software von der mindestens einen Kamera erfasste Bilder erkennt und auswertet. Bilderkennende Software ist marktüblich in hoher Qualität, z.B. aus dem Bereich der Automobiltechnik, am Markt verfügbar.

Es ist vorteilhaft, wenn die Düsenüberwachungsvorrichtung mindestens eine Reinigungseinrichtung aufweist, da so die Funktionseinheiten Stroboskop, Kamera und Beleuchtung bzw. auch das Schauglas auf einfache Weise schnell gereinigt werden können.

In einer Ausführung ist die Düsenüberwachungsvorrichtung an oder in dem Gehäuse angeordnet, wobei das Stroboskop, die Kamera und die Beleuchtung entweder zum Teil durch Öffnungen einer Gehäusewand des Gehäuses in einem oberen Gehäuseabschnitt in diesen hervorstehen oder in diesem oberen Gehäuseabschnitt vollständig angeordnet sind und auf die Peripherie der Trommel mit den Düsen gerichtet sind. Dies ist vorteilhaft, da so ein Einsatzbereich der Düsenüberwachungsvorrichtung für unterschiedliche Düsenzentrifugen vergrößert ist.

Eine Ausführung der Düsenzentrifuge sieht vor, dass das Schauglas der mindestens eine Abschnitt der Düsenüberwachungsvorrichtung ist, der mit dem Innenraum des Gehäuses in Kontakt steht. Damit lässt sich ein einfacher kompakter Aufbau erzielen. Wenn die Überwachungskammer an oder in einem oberen Gehäuseabschnitt des Gehäuses oberhalb der Peripherie der Trommel mit den Düsen angeordnet ist, ist eine Verschmutzung vermindert und außerdem eine optische Überwachung der Düsen von oben auf einfache Weise möglich.

Für eine vorteilhafte Erfassung der Düsen und der Düsenstrahlen ist es vorgesehen, dass das Stroboskop, die Kamera und die Beleuchtung derart in der Überwachungskammer angeordnet sind, dass sie durch das Schauglas auf die Peripherie der Trommel mit den Düsen gerichtet sind.

In einer weiteren Ausführung der Düsenzentrifuge ist sichtbar für jede Düse eine entsprechende Nummer bzw. Markierung oder auch ein passendes Symbol auf der Trommel angebracht oder eingraviert. Damit kann vorteilhaft eine einfache Zuordnung von Düse zu Düsenstrahl bei einer Bilderkennung/-auswertung ermöglicht werden.

Eine weitere Ausführung des Verfahrens sieht vor, dass in dem Verfahrensschritt Vergleichen und Auswerten eine bilderkennende Software verwendet wird, wobei bei einer Veränderung eines oder mehrerer Düsenstrahlen einer oder mehrerer Düsen eine Ausgabe zur automatischen Beeinflussung der Düsenzentrifuge oder/und eine Anzeige für einen Bediener erfolgt. Dies ist von besonderem Vorteil, da so eine schnelle Erfassung und Meldung von verstopften, teilverstopften oder vergrößerten Düsen erfolgen kann.

Dazu ist es besonders vorteilhaft, dass ein Zuordnen eines Düsenstrahls zu einer Düse und ein Erkennen der Düsen durch eine auf der Trommel angebrachte oder eingravierte entsprechende Nummer bzw. Markierung oder auch durch ein passendes Symbol neben der jeweiligen Düse eindeutig erfolgt.

Ein weiterer Vorteil ergibt sich, wenn im Verfahrensschritt Erfassen, Vergleich und Auswerten eine schnelle und automatische Erfassung stattfinden kann, die dann zum Aussetzen der Feststoffzufuhr verwendet werden kann. Nach einem Stopp der drehenden Trommel kann dann gezielt die verstopfte, teilverstopfte oder vergrößerte Düse gewechselt werden.

In einer noch weiteren Ausführung kann in dem Verfahrensschritt Erfassen die Beleuchtung zusätzlich zur Verbesserung einer Bilderfassung verwendet werden. Damit ergibt sich der Vorteil einer verbesserten Bilderfassung angepasst an unterschiedliche Randbedingungen in dem überwachten Bereich.

Ein weiterer Vorteil ergibt sich, wenn in dem Verfahrensschritt Erfassen eine Reinigungseinrichtung der Düsenüberwachungsvorrichtung zusätzlich zur Verbesserung einer Bilderfassung verwendet wird.

Nachfolgend wird die Erfindung anhand von Ausführungsbeispielen unter Bezug auf die Zeichnung näher erläutert. Es zeigen:
- Fig. 1: eine schematische Schnittansicht einer Düsenzentrifuge aus dem Stand der Technik;
- Fig. 2-3: schematische Schnittansichten einer erfindungsgemäßen Düsenzentrifuge mit einer erfindungsgemäßen Düsenüberwachungsvorrichtung;
- Fig. 4-4a: stark schematisierte Schnittansichten gemäß Linie IV-IV nach Fig. 3;
- Fig. 5: ein schematisches Blockschaltbild einer beispielhaften Steuereinheit; und
- Fig. 6: ein schematisches Flussdiagramm eines erfindungsgemäßen Verfahrens zum Überwachen von Düsen.

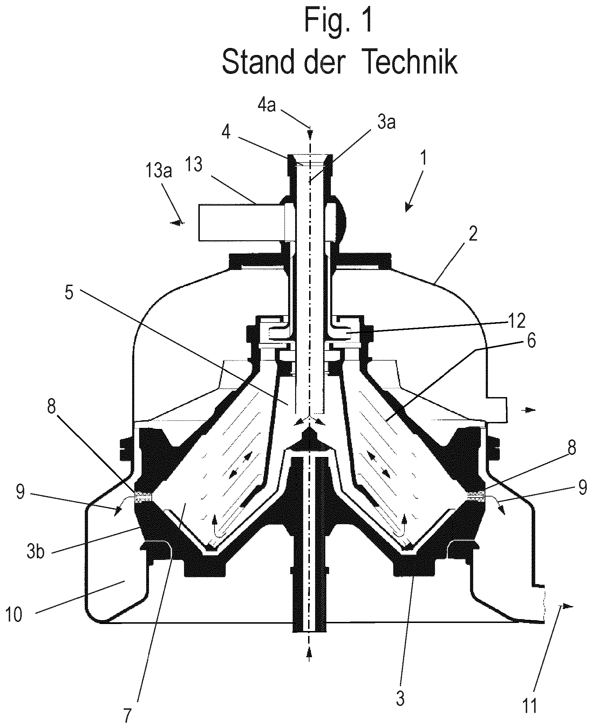

In Fig. 1 ist eine schematische Schnittansicht einer Düsenzentrifuge 1 aus dem Stand der Technik dargestellt.

Die Düsenzentrifuge 1 ist hier als ein Tellerseparator ausgebildet. Sie kann ein stillstehendes Gehäuse bzw. Gestell 2 aufweisen. In dem Gehäuse 2 ist eine drehbare Trommel 3 mit einer Drehachse 3a aufgenommen, die sich im Betrieb um die Drehachse 3a dreht. Die Trommel weist ein Zulaufrohr 4, eine Einlaufkammer 5, vorzugsweise ein Tellerpaket 6 und einen Schleuderraum 7 und Düsen 8 in der Peripherie 3b der Trommel 3 zum Feststoffaustrag auf. Das Gehäuse 2 weist ferner einen Ableitungsraum 10 (auch "Feststofffänger" genannt) mit Auslass 11 auf. Weiterhin weist die Düsenzentrifuge 1 ein Ableitungsmittel 12 und ein Ableitungsrohr 13 zur Ableitung der flüssigen Phase aus dem Schleuderraum 7 auf.

Begriffe wie "oben", "unten", "vorne" oder "hinten" und dgl. beziehen lediglich sich auf die dargestellten Ausführungsbeispiele und sind nicht einschränkend zu verstehen. So kann beispielsweise das Zulaufrohr 4 bei alternativen, hier nicht dargestellten Ausführungsformen auch von "unten" her in die Trommel geführt sein, obwohl in Fig. 1 eine Variante dargestellt ist, bei welcher das Zulaufrohr 4 von oben in die Trommel 3 geführt ist.

Das Zulaufrohr 4 erstreckt sich längs der Drehachse 3a bis in die zentral in der Trommel 3 angeordnete Einlaufkammer 5. Die Einlaufkammer 5 ist nach unten über einen nicht bezeichneten Verteiler geöffnet und mündet in den Schleuderraum 7. Der Schleuderraum 7 ist von der Trommel 3 umgrenzt. In dem Schleuderraum 7 ist das Tellerpaket 6 aus einer Mehrzahl von hier konischen Tellern angeordnet.

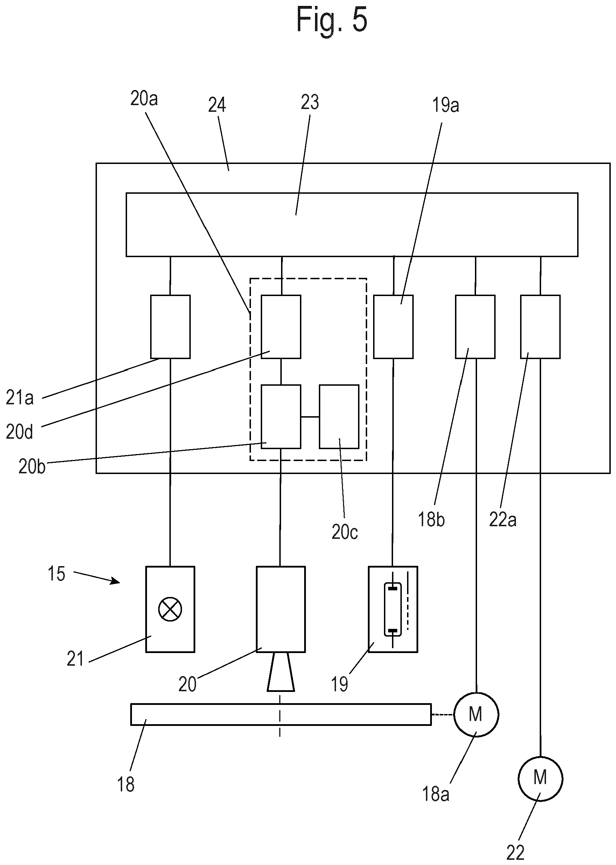

Über den Zulauf 4a wird ein Schleudergut, z.B. eine Suspension - ein Stoffgemisch aus einer oder mehreren Flüssigkeiten und darin verteilten Feststoffen -, durch das Zulaufrohr 4 in die Einlaufkammer 5 und den Verteiler in den Schleuderraum 7 geleitet. Aus der Suspension sollen Feststoffe geklärt und aufkonzentriert durch die Düsen 8 kontinuierlich ausgetragen werden. Dazu wird die Trommel 3 durch einen hier nicht gezeigten Trommelantrieb 22 (siehe Fig. 5) angetrieben, wobei sich die Trommel 3 um die Drehachse 3a dreht.

Zur Realisierung einer Ableitung der Feststoffe sind hier mehrere Düsen 8 am Außenumfang (Peripherie 3b) der Trommel 3 bzw. des Schleuderraumes 7 verteilt. Die Konzentratableitung erfolgt als Düsenstrahl 9 durch die jeweiligen Düsen 8 und sammelt sich in dem Ableitungsraum 10, welcher durch den Auslass 11 entleert wird. Die Düsen 8 sind im Betrieb vorzugsweise permanent offen und können im Betrieb permanent Feststoffe austragen.

Wenigstens eine Flüssigkeitsphase wird an dem oberen Ende der Trommel 3 durch wenigstens ein oder mehrere Ableitungsmittel 12 in ein Ableitrohr 13 als Ableitungsauslauf 13a abgeführt. Das Ableitungsmittel kann als Zentripetalpumpe bzw. Greifer ausgebildet sein. Es kann aber auch in anderer Weise ausgebildet sein, so als Überläufe. Die Trommel 3 kann hinsichtlich in offener oder halboffener oder in hermetischer oder hydrohermetischer Bauweise ausgestaltet sein.

Die Konzentration im Feststoff- bzw. Düsenaustrag, d.h. in den Düsenstrahlen 9, wird bei Düsenzentrifugen durch folgende Parameter bestimmst:
a) Konzentration des Feststoffes im Zulauf 4a,
b) Anzahl der Düsen 8,
c) Durchmesser der Düsen 8 und
d) Drehzahl der Trommel 3.

Der Durchlass einer Düse 8 kann durch die hohe Feststoffkonzentration in dem Düsenstrahl 9 z.B. durch Verengung oder Verstopfung verringert oder sogar blockiert sein.

Wenn beispielsweise in einem Fall von achtzehn Düsen 8 eine, d.h. 1/18 der Düsen 8, verblockt ist, nimmt die Düsenleistung - bei konstanter Konzentration des Feststoffes im Zulauf 4a und konstanter Drehzahl der Trommel 3- um 1/18 ab. Dadurch nimmt, unter der Annahme, dass die Klärung der Suspension gleich gut bleibt, die Verweilzeit des Feststoffes im Schleuderraum zu, was dann zur Überfüllung des Schleuderraumes mit Feststoff führt. Damit steigt die Gefahr einer unzulässigen Unwucht der Trommel 3 und auch weiterer Düsenverstopfung.

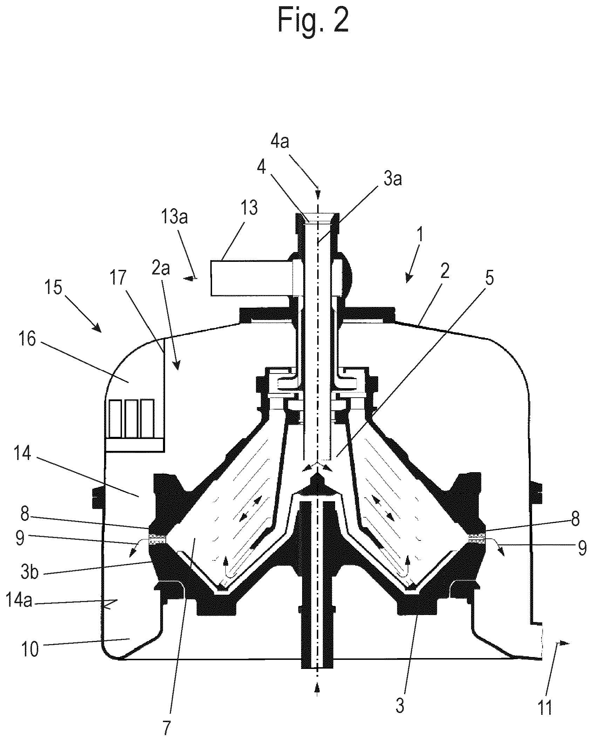

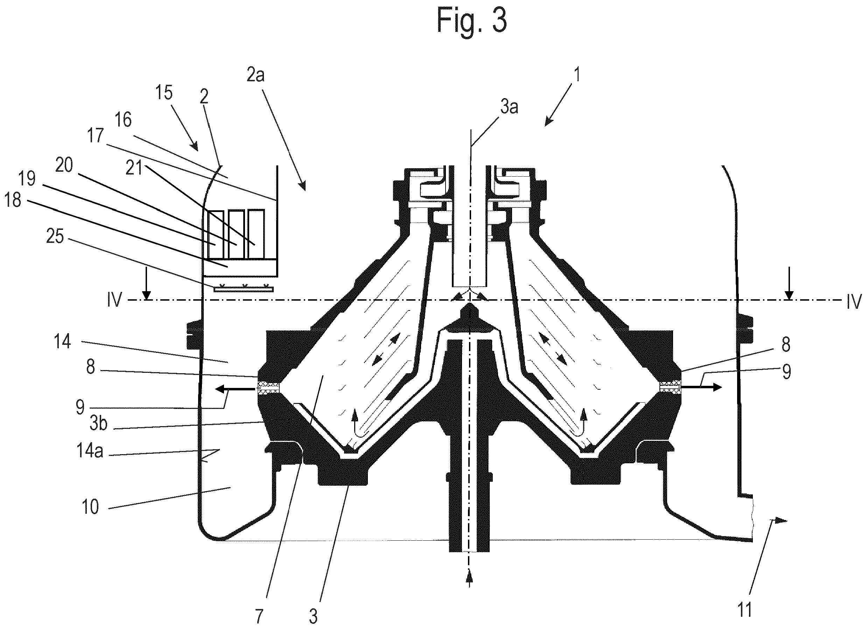

Fig. 2 zeigt eine schematische Schnittansicht einer erfindungsgemäßen Düsenzentrifuge 1 mit einer erfindungsgemäßen Düsenüberwachungsvorrichtung 15. In Fig. 3 ist eine vergrößerte schematisch Ansicht der Düsenüberwachungsvorrichtung 15 dargestellt.

Die Düsenüberwachungsvorrichtung 15 dient zur Überwachung der Düsen 8 der Düsenzentrifuge 1 und umfasst in einem ersten Ausführungsbeispiel mindestens ein Stroboskop 19, mindestens einen Sensor, der ein optischer Sensor ist und als Kamera 20 ausgebildet ist, und eine Steuereinheit 24 (Fig. 5).

In einem zweiten Ausführungsbeispiel weist die Düsenüberwachungsvorrichtung 15 eine Beleuchtung 21 auf.

Ein drittes Ausführungsbeispiel sieht vor, dass hierbei die Düsenüberwachungsvorrichtung 15 in einer Überwachungskammer 16 angeordnet ist.

Und in einem vierten Ausführungsbeispiel, das in den Figuren 2 und 3 gezeigt, ist, weist die Düsenüberwachungsvorrichtung 15 ein Schauglas 18 auf.

Die Düsenüberwachungsvorrichtung 15 bildet so eine optische Überwachung der Düsen 8 bzw. Düsenstrahlen 9 und wird auch als Düsenmonitor bezeichnet.

Die Düsenüberwachungsvorrichtung 15 kann unterschiedlich an bzw. in dem Gehäuse 2 angeordnet sein. So ist es möglich, dass ihre Funktionseinheiten Stroboskop 19, Kamera 20 und Beleuchtung 21 derart angebracht sind, dass sie entweder zum Teil durch Öffnungen einer Gehäusewand des Gehäuses 2 in einem oberen Gehäuseabschnitt 2a in diesen hervorstehen oder in diesem oberen Gehäuseabschnitt 2a vollständig angeordnet sind auf die Peripherie 3b der Trommel 3 mit den Düsen 8 gerichtet sind. Dies ist nicht gezeigt, aber leicht vorstellbar.

Die Düsenüberwachungsvorrichtung 15 ist in dem dritten und vierten Ausführungsbeispiel in einer Überwachungskammer 16 angeordnet. Die Überwachungskammer 16 befindet sich hier innerhalb des Gehäuses 2 in dem oberen Gehäuseabschnitt 2a an einer Innenseite des Gehäuses 2 oberhalb der Peripherie 3b der Trommel 3 mit den Düsen 8. Eine Kammerwand 17 umgibt die Düsenüberwachungsvorrichtung 15 und trennt die Überwachungskammer 16 von dem Innenraum des Gehäuses 2 der Düsenzentrifuge 1. Dabei ist eine untere Öffnung der Überwachungskammer 16 vorgesehen, durch welche die Funktionseinheiten auf den Überwachungsraum 14 gerichtet sind.

In dem vierten Ausführungsbeispiel ist das Schauglas 18 ist in der unteren Öffnung der Überwachungskammer 16 angebracht und nach unten in den Überwachungsraum 14, der einen Abschnitt des Gehäuses 2 bildet, gerichtet. Der Überwachungsraum 14 ist hier zwischen der Peripherie 3b der Trommel 3 mit den Düsen 8 und einer zugeordneten umlaufenden Innenseite 14a des Gehäuses 2 festgelegt.

Das Stroboskop 19, die Kamera 20 und die Beleuchtung 21 sind derart in der Überwachungskammer 16 angeordnet, dass sie durch das Schauglas 18 in den Überwachungsraum 14 gerichtet sind. Dabei können das Stroboskop 19, die Kamera 20 und die Beleuchtung 21 im Wesentlichen parallel zu der vertikalen Drehachse 3a der Trommel 3 angeordnet sein.

Zudem weist die Düsenüberwachungsvorrichtung 15 hier eine Reinigungseinrichtung 25 auf, die von einer geeigneten Position aus die Funktionseinheiten Stroboskop 19, Kamera 20 und Beleuchtung 21 (in dem vierten Ausführungsbeispiel auch das Schauglas 18) reinigt. Die Reinigungseinrichtung 25 ist hier in dem Innenraum des Gehäuses 2 angeordnet und mit, z.B. Sprühdüse(n), ausgebildet.

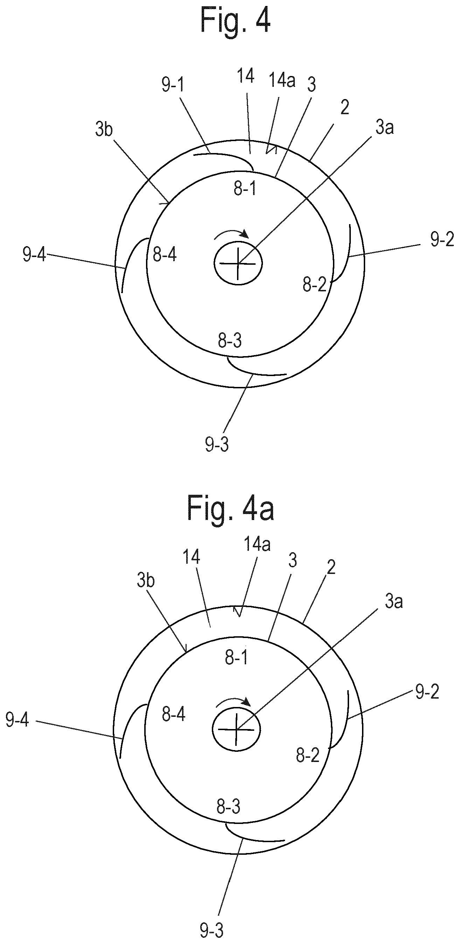

Fig. 4-4a zeigten stark schematisierte Schnittansichten gemäß Linie IV-IV nach Fig. 3.

In Fig. 4 verläuft die Drehachse 3a senkrecht zur Zeichenebene. Die Trommel 3 mit der Peripherie 3b verläuft koaxial zu dem Gehäuse 2 und zur Drehachse 3a. In dieser schematischen Schnittansicht weist die Peripherie 3b der Trommel 3 vier Düsen 8-1, 8-2, 8-3, 8-4 auf. Selbstverständlich sind auch andere Düsenanzahlen mögliche. Jeder Düse 8-1, 8-2, 8-3, 8-4 ist ein jeweiliger Düsenstrahl 9-1, 9-2, 9-3, 9-4 zugeordnet. Da die Trommel 3 hier im Uhrzeigersinn (Pfeil) um die Drehachse 3a rotiert, sind die Düsenstrahlen 9-1, 9-2, 9-3, 9-4 entsprechend abgelenkt.

Der Überwachungsraum 14 ist in Fig. 4-4a jeweils im Bereich "12 Uhr" angeordnet. Natürlich kann der Überwachungsraum 14 auch an anderer Stelle festgelegt sein. Auch können mehr als eine Düsenüberwachungsvorrichtung 15 vorgesehen sein.

Alle Düsen 8-1, 8-2, 8-3, 8-4 sind in Fig. 4 nicht blockiert, wodurch alle Düsenstrahlen 9-1, 9-2, 9-3, 9-4 vorhanden und daher unverändert sind. Die Düsenüberwachungsvorrichtung 15 erfasst die Zustände aller Düsenstrahlen 9-1, 9-2, 9-3, 9-4 in einer Weise, die unten noch näher erläutert wird.

Fig. 4a zeigt den Zustand bei einer blockierten Düse 8-1. Der zugehörige Düsenstrahl 9-1 ist nicht mehr vorhanden. Die Düsenüberwachungsvorrichtung 15 erfasst die Zustände aller Düsenstrahlen 9-1, 9-2, 9-3, 9-4 und ermittelt den nicht mehr vorhandenen Düsenstrahl 9-1. Dies wird unten ausführlich beschrieben.

In Fig. 5 ist ein schematisches Blockschaltbild einer beispielhaften Steuereinheit 24 dargestellt.

Die Düsenzentrifuge 1 ist mit einer Steuerung versehen. Fig. 5 zeigt ein Beispiel einer solchen Steuerung mit der Steuereinheit 24, mit welcher gleichzeitig auch die Düsenüberwachungsvorrichtung 15 gesteuert werden kann. Selbstverständlich kann eine Steuerung der Düsenüberwachungsvorrichtung 15 auch separat erfolgen.

Die Steuereinheit 24 umfasst hier eine Zentralsteuereinrichtung 23, die einerseits mit einer Steuerung der Düsenzentrifuge 1, z.B. mit deren Trommelantrieb 22 über eine Trommelantriebssteuerung 22a und andererseits mit den Funktionsgruppen der Düsenüberwachungsvorrichtung 15 verbunden ist.

In dem gezeigten vierten Ausführungsbeispiel der Düsenüberwachungsvorrichtung 15 ist das Schauglas 18 als ein rotierendes Schauglas 18 mit einem Schauglasantrieb 18a ausgebildet. Mit Hilfe dieses rotierenden Schauglases 18 ist durch das Schauglas 18 ein freier Blick in den Innerraum des Gehäuses 2, insbesondere in den Überwachungsraum 14 permanent, auch bei Betrieb der Düsenzentrifuge 1, ermöglicht. Der Schauglasantrieb ist mit einer Schauglasantriebssteuerung 18b verbunden. Die Schauglasantriebssteuerung 18b versorgt den Schauglasantrieb 18a mit Energie und schaltet den Schauglasantrieb 18a ein/aus.

Das Stroboskop 19 weist eine Lichtquelle auf, die z.B. eine Blitzlampe/röhre (in Fig. 5 dargestellt), Leuchtdiode, Laserdiode, usw. sein kann. Diese Lichtquelle wird von einer Stroboskopsteuerung 19a mit Energie versorgt und gesteuert/geschaltet.

Durch das Schauglas 18 werden Lichtimpulse aus dem Stroboskop 19 von oben in den Überwachungsraum 14 auf die rotierende Trommel 3 gestrahlt. Eine Frequenz der Lichtimpulse ist mittels der Stroboskopsteuerung 19a einstellbar. Die Frequenz der Lichtimpulse wird so gewählt, dass ein annähernd stehendes Bild der Trommel 3 inkl. des jeweiligen Düsenstrahls 9-1, 9-2, 9-3, 9-4 der zugehörigen Düse 8-1, 8-2, 8-3, 8-4 entsteht. Die Bilder der Trommel 3 können Einzelbilder oder Bildfolgen sein.

Hierzu soll ein Beispiel dienen. Beträgt die Drehzahl n der Trommel n = 4500 min⁻¹, so wird die Frequenz f der Lichtimpulse des Stroboskops 19 mit f = (4500/60) s⁻¹ = 75 Hz eingestellt. Wird eine leicht abweichende Frequenz gewählt, erscheint die Bildfolge der Trommel 3 nicht mehr stehend, sondern leicht "voreilend" oder "nacheilend". Somit "wandern" alle Düsen 8-1, 8-2, 8-3, 8-4 mit ihren zugehörigen Düsenstrahlen 9-1, 9-2, 9-3, 9-4 langsam durch das Bild. Von oben sichtbar ist für jede Düse 8-1, 8-2, 8-3, 8-4 eine entsprechende Nummer bzw. Markierung oder auch ein passendes Symbol auf der Trommel 3 angebracht oder eingraviert, so dass eine Zuordnung zu jeder Düse 8-1, 8-2, 8-3, 8-4 und zugehörigem Düsenstrahl 9-1, 9-2, 9-3, 9-4 möglich ist.

Mit Hilfe der Kamera 20 wird dieses stehende Bild bzw. die langsam voreilende Bildfolge des jeweiligen Düsenstrahls 9-1, 9-2, 9-3, 9-4 der Trommel 3 im Überwachungsraum 14 erfasst und direkt an eine Schaltwarte übertragen, so dass ein Betreiber den Zustand der Düsen 8-1, 8-2, 8-3, 8-4 anhand des jeweiligen Bildes in Echtzeit optisch auswerten kann. Dies ist nicht dargestellt, aber leicht vorstellbar.

In Fig. 5 ist eine automatische Auswertung des jeweiligen Bildes einer Bildfolge mit Hilfe eines Bildverarbeitungssystems gezeigt, wobei im Falle einer Düsenverstopfung eine erforderliche Aktion der Steuerung der Düsenzentrifuge 1 ausgelöst werden kann.

Dazu ist in diesem Beispiel die Kamera 20 mit einer Kamerasteuerung 20a verbunden. Die Kamerasteuerung 20a weist einen Vergleicher 20b, einen Speicher 20c und eine Auswertung 20d auf. Die durch die Kamera 20 erfasste Bildfolge wird von dem Vergleicher 20b mit einem oder mehreren Bildern verglichen, die zuvor in dem Speicher 20c gespeichert wurden. Der Vergleicher 20b überträgt dann ein dem Vergleich entsprechendes Signal einschließlich einer Düsenidentifkation an die Auswertung 20d. Die Auswertung 20d wertet das erhaltene Signal aus, z.B. mittels einer bilderkennenden Software, wobei bei einem verändertem Düsenstrahl 9 die zugehörige Düse 8 ermittelt und ein entsprechendes Alarmsignal ausgegeben wird. Dies Alarmsignal kann optisch durch Warnlampen oder/und auf einem Display der Steuereinheit 24 bzw. einer übergeordneten Steuerwarte angezeigt werden. Dazu steht die Kamerasteuerung 20a mit der Zentralsteuereinrichtung 23 in Verbindung, welche z.B. auch eine Beeinflussung des Betriebs der Düsenzentrifuge 1 vornehmen kann.

Die Beleuchtung 21 weist eine Lichtquelle, z.B. LED, auf und ist mit einer Beleuchtungssteuerung 21a verbunden. Die Beleuchtungssteuerung 21a versorgt die Beleuchtung 21 mit Energie, schaltet die Beleuchtung 21 ein/aus und kann die Beleuchtung 21 in ihrer Beleuchtungsstärke einstellen. Die Beleuchtung 21 kann zudem mit einer festen oder/und verstellbaren Optik versehen sein. Die Beleuchtung 21 kann die Lichtverhältnisse in dem Überwachungsraum 14 optimieren.

In diesem Beispiel der Steuereinheit 24 ist die Zentralsteuereinrichtung 23 mit der Schauglasantriebssteuerung 18b, der Stroboskopsteuerung 19a, der Kamerasteuerung 20a, der Beleuchtungssteuerung 21a und der Trommelantriebssteuerung 22a verbunden und kann diese Funktionsgruppen in zusammenhängender Weise beeinflussen und steuern. So kann die Zentralsteuereinrichtung 23 die Stroboskopsteuerung 19a abhängig von Drehzahldaten der Trommelantriebssteuerung 22a in Bezug auf stehende Bilder und wandernde Bilder vorteilhaft beeinflussen.

Zudem kann die Zentralsteuereinrichtung 23 eine Helligkeitsregelung des Überwachungsbereiches 14 mit der Beleuchtung 21 durchführen, indem die Kamera 20 als Helligkeitssensor benutzt wird. Natürlich kann auch ein anderer Helligkeitssensor vorgesehen sein.

Die Düsenüberwachungsvorrichtung 15 kann außerdem auch derart an dem Gehäuse 2 der Düsenzentrifuge 1 angebracht sein, dass die Überwachungskammer 16 außerhalb des Gehäuses 2 angebracht ist und nur das Schauglas 18 mit dem Innenraum des Gehäuses 2 in Kontakt steht. Dabei kann das Schauglas 18 in einer Öffnung des Gehäuses 2 in dem oberen Gehäuseabschnitt 2a so befestigt sein, dass es diese Öffnung verschließt und auf den Überwachungsraum 14 ausgerichtet ist.

Das Stroboskop 19 kann auch in dem Innenraum des Gehäuses 2 angebracht sein, um einen negativen Einfluss durch Blendeinwirkungen des rotierenden Schauglases 18 zu vermeiden. In diesem Fall ist eine Reinigung des Stroboskops 19 durch eine Sprühdüse oder mehrere der Reinigungseinrichtung 25 vorgesehen.

Die Reinigungseinrichtung 25 kann automatisch in bestimmten Zeitintervallen oder auch von der Zentralsteuereinrichtung 23 in Abhängigkeit von der oben beschriebenen erfassten Helligkeit in Überwachungsraum 14 gesteuert werden.

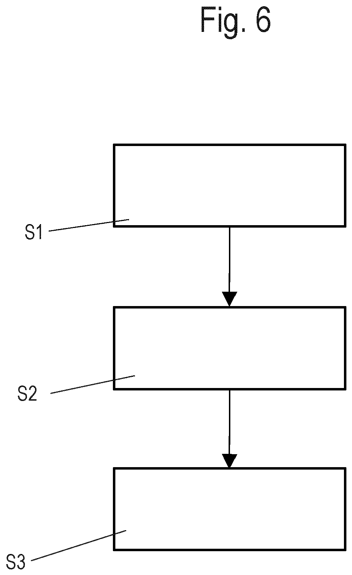

In Fig. 6 ist ein schematisches Flussdiagramm eines erfindungsgemäßen Verfahrens zum Überwachen von Düsen 8 einer Düsenzentrifuge 1 mit der Düsenüberwachungsvorrichtung 15 dargestellt.

In einem ersten Verfahrensschritt S1 werden Lichtimpulse von dem Stroboskop 19 in einen Überwachungsraum 14 auf die Peripherie 3b der rotierende Trommel 3 mit den Düsen 8 der Düsenzentrifuge 1 ausgesendet bzw. gestrahlt bzw. projiziert. Dabei wird die Frequenz der Lichtimpulse in Abhängigkeit von der Drehzahl bzw. der Drehfrequenz der Trommel so eingestellt und synchronisiert, dass ein annähernd stehendes Bild der Trommel 3 einschließlich des jeweiligen Düsenstrahls 9-1, 9-2, 9-3, 9-4 der zugehörigen Düse 8-1, 8-2, 8-3, 8-4 entsteht. Damit kann eine erste Düse 8 mit ihrem zugehörigen Düsenstrahl 9 überwacht werden. Dann wird eine leicht bzw. geringfügig von der Synchronisation abweichende, z.B. eine niedrigere, Frequenz gewählt, um die Bildfolge der Trommel 3 zu der nächsten Düse 8 weiter wandern zu lassen. So können nacheinander umlaufend Bilder aller Düsen 8 der Trommel 3 erfasst werden.

Jedes so mit der Drehfrequenz der Trommel synchronisierte und somit scheinbar stehende Bild einer jeweiligen Düse 8 mit ihrem Düsenstrahl 9 wird in einem zweiten Verfahrensschritt S2 von der Kamera 20 erfasst.

In einem dritten Verfahrensschritt S3 wird das von der Kamera 20 erfasste Bild mit einem vorher gespeicherten Bild zum Überwachen der Düsen 8 verglichen und ausgewertet. Wird eine Veränderung eines oder mehrerer Düsenstrahlen 9 aus einer oder mehrerer Düsen 8 ermittelt, erfolgt eine Ausgabe zur automatischen Beeinflussung der Düsenzentrifuge 1 oder/und eine Anzeige für einen Bediener. Das Vergleichen und Auswerten erfolgt mittels einer bilderkennenden Software.

Die Beleuchtung 21 kann in dem zweiten Verfahrensschritt S2 zusätzlich zur Verbesserung einer Bilderfassung zum Einsatz kommen. Die Reinigungseinrichtung 25 kann dazu ebenfalls verwendet werden.

Die Ausgabe in dem dritten Verfahrensschritt S3 kann ein Leuchtmelder, ein Akustikmelder, eine Anzeige auf einem Display oder/und ein Signal für eine automatische Beeinflussung des Betriebs der Düsenzentrifuge 1 sein. Eine Anzeige kann z.B. den Text "Düse Nr. xyz verstopft", "Düse Nr. xyz teilverstopft" usw. aufweisen.

Wenn in den Verfahrensschritten Erfassen, Vergleich und Auswerten eine schnelle und automatische Erfassung stattfindet, kann diese dann zum Aussetzen der Feststoffzufuhr zu der Düsenzentrifuge 1 verwendet werden kann. Nach einem Stopp der drehenden Trommel 3 kann dann gezielt die verstopfte, teilverstopfte oder vergrößerte Düse 8 gewechselt werden.

Die erfindungsgemäße Düsenüberwachungsvorrichtung 15 stellt auf diese Weise einen berührungslosen optischen Düsenmonitor für die Düsen 8 der Düsenzentrifuge 1 bereit.

Die in Fig. 5 gezeigte Steuereinheit 24 kann auch ohne die Trommelantriebssteuerung 22a als eine eigene, separate Steuereinheit 24 der Düsenüberwachungsvorrichtung 15 ausgeführt sein. Dabei kann die Zentralsteuereinrichtung 23 über eine geeignete Schnittstelle mit der Steuerung der Düsenzentrifuge 1 verbunden sein.

### Bezugszeichen

- 1: Düsenzentrifuge
- 2: Gehäuse
- 2a: Gehäuseabschnitt
- 3: Trommel
- 3a: Drehachse
- 3b: Peripherie
- 4: Zulaufrohr
- 4a: Zulauf
- 5: Einlaufkammer
- 6: Tellerpaket
- 7: Schleuderraum
- 8, 8-1, 8-2, 8-3, 8-4: Düse
- 9, 9-1, 9-2, 9-3, 9-4: Düsenstrahl
- 10: Ableitungsraum
- 11: Auslass
- 12: Ableitungsmittel
- 13: Ableitungsrohr
- 13a: Ableitungsauslauf
- 14: Überwachungsraum
- 14a: Innenseite
- 15: Düsenüberwachungsvorrichtung
- 16: Überwachungskammer
- 17: Kammerwand
- 18: Schauglas
- 18a: Schauglasantrieb
- 18b: Schauglasantriebssteuerung
- 19: Stroboskop
- 19a: Stroboskopsteuerung
- 20: Kamera
- 20a: Kamerasteuerung
- 20b: Vergleicher
- 20c: Speicher
- 20d: Auswertung
- 21: Beleuchtung
- 21a: Beleuchtungsteuerung
- 22: Trommelantrieb
- 22a: Trommelantriebssteuerung
- 23: Zentralsteuereinrichtung
- 24: Steuereinheit
- 25: Reinigungseinrichtung
- S1, S2, S3: Verfahrensschritt

## Patentansprüche

1. Düsenzentrifuge (1), insbesondere Düsenseparator, aufweisend ein Gehäuse (2), in welchem eine Trommel (3), die eine definierte Anzahl von Düsen (8) an einer Peripherie (3b) der Trommel (3) aufweist, drehbar um eine vertikale Drehachse (3a) angeordnet ist, und eine Düsenüberwachungsvorrichtung (15), wobei mindestens ein Abschnitt der Düsenüberwachungsvorrichtung (15) mit einem Innenraum des Gehäuses (2) in Kontakt steht, wobei die Düsenüberwachungsvorrichtung (15) mindestens einen Sensor und eine Steuereinheit (24) aufweist, wobei die Düsenüberwachungsvorrichtung (15) als optischer Düsenmonitor mit mindestens einem Stroboskop (19) und mindestens einer Kamera (20) ausgebildet ist, wobei die mindestens eine Kamera (20) den mindestens einen Sensor bildet, **dadurch gekennzeichnet, dass** die Düsenüberwachungsvorrichtung (15) an oder in dem Gehäuse (2) angeordnet ist, wobei das Stroboskop (19), die Kamera (20) und eine Beleuchtung (21) entweder zum Teil durch Öffnungen einer Gehäusewand des Gehäuses (2) in einem oberen Gehäuseabschnitt (2a) in diesen hervorstehen oder in diesem oberen Gehäuseabschnitt (2a) vollständig angeordnet sind und auf die Peripherie (3b) der Trommel (3) mit den Düsen (8) gerichtet sind.

2. Düsenzentrifuge (1) nach Anspruch 1, **dadurch gekennzeichnet, dass** ein Schauglas (18) der mindestens eine Abschnitt der Düsenüberwachungsvorrichtung (15) ist, der mit dem Innenraum des Gehäuses (2) in Kontakt steht.

3. Düsenzentrifuge (1) nach Anspruch 2, **dadurch gekennzeichnet, dass** eine Überwachungskammer (16) an oder in einem oberen Gehäuseabschnitt (2a) des Gehäuses (2) oberhalb der Peripherie (3b) der Trommel (3) mit den Düsen (8) angeordnet ist, wobei das mindestens eine Stroboskop (19), die mindestens eine Kamera (20) und die Beleuchtung (21) in der Überwachungskammer (16) angebracht sind.

4. Düsenzentrifuge (1) nach Anspruch 3, **dadurch gekennzeichnet, dass** das Stroboskop (19), die Kamera (20) und die Beleuchtung (21) derart in der Überwachungskammer (16) angeordnet sind, dass sie durch das Schauglas (18) auf die Peripherie (3b) der Trommel (3) mit den Düsen (8) gerichtet sind.

5. Düsenzentrifuge (1) nach einem der vorhergehenden Ansprüche, **dadurch gekennzeichnet, dass** sichtbar für jede Düse (8) eine entsprechende Nummer bzw. Markierung oder auch ein passendes Symbol auf der Trommel (3) angebracht oder eingraviert ist.

6. Düsenzentrifuge (1) nach einem der Ansprüche 3 bis 5, **dadurch gekennzeichnet, dass** das mindestens eine Stroboskop (19), die mindestens eine Kamera (20) und die Beleuchtung (21) in der Überwachungskammer (16) über dem Schauglas (18) angeordnet sind, wobei das Schauglas (18) in einer Öffnung der Überwachungskammer (16) angebracht ist.

7. Düsenzentrifuge (1) nach einem der Ansprüche 3 bis 5, **dadurch gekennzeichnet, dass** die mindestens eine Kamera (20) und die Beleuchtung (21) in der Überwachungskammer (16) über dem Schauglas (18) angeordnet sind, wobei das Schauglas (18) in einer Öffnung der Überwachungskammer (16) angebracht ist, und wobei das mindestens eine Stroboskop (19) außerhalb der Überwachungskammer (16) angeordnet ist.

8. Düsenzentrifuge (1) nach einem der Ansprüche 2 bis 7, **dadurch gekennzeichnet, dass** das Schauglas (18) als ein rotierendes Schauglas (18) mit einem Schauglasantrieb (18a) ausgebildet ist.

9. Düsenzentrifuge (1) nach Anspruch 8, **dadurch gekennzeichnet, dass** die Steuereinheit (24) der Düsenüberwachungsvorrichtung (15) den Schauglasantrieb (18a), das mindestens eine Stroboskop (19), die mindestens eine Kamera (20) und die Beleuchtung (21) steuert.

10. Düsenzentrifuge (1) nach Anspruch 9, **dadurch gekennzeichnet, dass** die mindestens eine Kamera (20) mit einer Auswertung (20d) der Steuereinheit (24) verbunden ist, wobei die Auswertung (20d) mittels einer bilderkennenden Software von der mindestens einen Kamera (20) erfasste Bilder erkennt und auswertet.

11. Düsenzentrifuge (1) nach einem der vorherigen Ansprüche, **dadurch gekennzeichnet, dass** die Düsenüberwachungsvorrichtung (15) mindestens eine Reinigungseinrichtung (25) aufweist.

12. Düsenzentrifuge (1) nach einem der vorherigen Ansprüche, **dadurch gekennzeichnet, dass** die Düsenzentrifuge (1) eine kontinuierlich arbeitende Düsenzentrifuge (1) ist.

13. Verfahren zum Überwachen von Düsen (8) einer Düsenzentrifuge (1) mit einer Düsenüberwachungsvorrichtung (15), wobei die Düsenzentrifuge (1) ein Gehäuse (2), in welchem eine Trommel (3), die eine definierte Anzahl von Düsen (8) an einer Peripherie (3b) der Trommel (3) aufweist, drehbar um eine vertikale Drehachse (3a) angeordnet ist, wobei ein Stroboskop (19), eine Kamera (20) und eine Beleuchtung (21) derart in einer Überwachungskammer (16) angeordnet sind, dass sie auf die Peripherie (3b) der Trommel (3) mit den Düsen (8) gerichtet sind, mit den Verfahrensschritten
| | |
|---|---|
| (S1) | Aussenden von Lichtimpulsen von dem Stroboskop (19) auf die Peripherie (3b) der rotierenden Trommel (3) mit den Düsen (8) und Einstellen der Frequenz der Lichtimpulse anhand einer Drehfrequenz der Trommel (3) und Synchronisieren mit dieser; |
| (S2) | Erfassen einer synchronisierten und somit scheinbar stehenden Bildfolge der Trommel (3) einschließlich eines jeweiligen Düsenstrahls (9) der zugehörigen Düse (8) mittels der Kamera (20); und |
| (S3) | Vergleichen der von der Kamera (20) erfassten Bildfolge mit vorher gespeicherten Bildfolgen und Auswerten der erfassten Bildfolge anhand des Vergleichens zum Überwachen der Düse (8), |
**dadurch gekennzeichnet, dass** in dem Verfahrensschritt Erfassen (S2) eine von der Drehfrequenz der Trommel geringfügig abweichende Frequenz der Lichtimpulse des Stroboskops gewählt wird, um die mit der Kamera (20) erzeugte Bildfolge der Trommel (3), welche nun nicht mehr synchronisiert ist, zu der nächsten Düse (8) weiter wandern zu lassen, um nacheinander umlaufend jeweils Bilder aller Düsen (8) der Trommel (3) zu erfassen.

14. Verfahren nach Anspruch 13, **dadurch gekennzeichnet, dass** in dem Verfahrensschritt Vergleichen und Auswerten (S3) eine bilderkennende Software verwendet wird, wobei bei einer Veränderung eines oder mehrerer Düsenstrahlen (9) einer oder mehrerer Düsen (8) eine Ausgabe zur automatischen Beeinflussung der Düsenzentrifuge (1) oder/und eine Anzeige für einen Bediener erfolgt.

15. Verfahren nach Anspruch 13 oder 14, **dadurch gekennzeichnet, dass** ein Zuordnen eines Düsenstrahls (9) zu einer Düse (8) und ein Erkennen der Düsen (8) durch eine auf der Trommel (3) angebrachte oder eingravierte entsprechende Nummer bzw. Markierung oder auch durch ein passendes Symbol neben der jeweiligen Düse (8) eindeutig erfolgt.

16. Verfahren nach einem der Ansprüche 13 bis 15, **dadurch gekennzeichnet, dass** in dem Verfahrensschritt Erfassen die Beleuchtung (21) zusätzlich zur Verbesserung einer Bilderfassung verwendet wird.

17. Verfahren nach einem der Ansprüche 13 bis 16, **dadurch gekennzeichnet, dass** in dem Verfahrensschritt Erfassen eine Reinigungseinrichtung (25) der Düsenüberwachungsvorrichtung (15) zusätzlich zur Verbesserung einer Bilderfassung verwendet wird.

18. Verfahren nach einem der Ansprüche 13 bis 17, **dadurch gekennzeichnet, dass** in eine in den Verfahrensschritten Erfassen, Vergleich und Auswerten erfolgte schnelle und automatische Erfassung zum Aussetzen einer Feststoffzufuhr zu der Düsenzentrifuge (1) verwendet wird.

## Claims

1. Nozzle centrifuge (1), in particular a nozzle separator, comprising a housing (2) in which a drum (3) having a defined number of nozzles (8) on a periphery (3b) of the drum (3) is arranged rotatably about a vertical rotational axis (3a), and a nozzle monitoring device (15), wherein at least a section of the nozzle monitoring device (15) is in contact with an interior space of the housing (2), wherein the nozzle monitoring device (15) comprises at least one sensor and a control unit (24),
wherein the nozzle monitoring device (15) is designed as an optical nozzle monitor having at least one stroboscope (19) and at least one camera (20), wherein the at least one camera (20) forms the at least one sensor,
**characterized in that**
the nozzle monitoring device (15) is arranged on or in the housing (2), wherein the stroboscope (19), the camera (20) and the illumination (21) either partially protrude into a housing wall of the housing (2) in an upper housing section (2a) through openings therein or are completely arranged in this upper housing section (2a) and are directed towards the periphery (3b) of the drum (3) with the nozzles (8).

2. Nozzle centrifuge (1) according to claim 1, **characterized in that** a sight glass (18) is the at least one section of the nozzle monitoring device (15) that is in contact with the interior space of the housing (2).

3. Nozzle centrifuge (1) according to claim 2, **characterized in that** a monitoring chamber (16) is arranged at or in an upper housing section (2a) of the housing (2) above the periphery (3b) of the drum (3) with the nozzles (8), wherein the at least one stroboscope (19), the at least one camera (20) and the illumination (21) are mounted in the monitoring chamber (16).

4. Nozzle centrifuge (1) according to claim 3, **characterized in that** the stroboscope (19), the camera (20) and the illumination (21) are arranged in the monitoring chamber (16) in such a way that they are directed through the sight glass (18) onto the periphery (3b) of the drum (3) with the nozzles (8).

5. Nozzle centrifuge (1) according to one of the preceding claims, **characterized in that** visibly for each nozzle (8) a corresponding number or marking or also a suitable symbol is applied to or engraved on the drum (3).

6. Nozzle centrifuge (1) according to one of claims 3 to 5, **characterized in that** the at least one stroboscope (19), the at least one camera (20) and the illumination (21) are arranged in the monitoring chamber (16) above the sight glass (18), wherein the sight glass (18) is mounted in an opening of the monitoring chamber (16).

7. Nozzle centrifuge (1) according to one of claims 3 to 5, **characterized in that** the at least one camera (20) and the illumination (21) are arranged in the monitoring chamber (16) above the sight glass (18), wherein the sight glass (18) is arranged in an opening of the monitoring chamber (16), and wherein the at least one stroboscope (19) is arranged outside the monitoring chamber (16).

8. Nozzle centrifuge (1) according to one of claims 2 to 7, **characterized in that** the sight glass (18) is designed as a rotating sight glass (18) having a sight glass drive (18a).

9. Nozzle centrifuge (1) according to claim 8, **characterized in that** the control unit (24) of the nozzle monitoring device (15) controls the sight glass drive (18a), the at least one stroboscope (19), the at least one camera (20) and the illumination (21).

10. Nozzle centrifuge (1) according to claim 9, **characterized in that** the at least one camera (20) is connected to an evaluation (20d) of the control unit (24), wherein the evaluation (20d) recognizes and evaluates images captured by the at least one camera (20) by means of image-recognizing software.

11. Nozzle centrifuge (1) according to one of the preceding claims, **characterized in that** the nozzle monitoring device (15) comprises at least one cleaning device (25).

12. Nozzle centrifuge (1) according to one of the preceding claims, **characterized in that** the nozzle centrifuge (1) is a continuously operating nozzle centrifuge (1).

13. Method for monitoring nozzles (8) of a nozzle centrifuge (1) having a nozzle monitoring device (15), wherein the nozzle centrifuge (1) comprises a housing (2) in which a drum (3) having a defined number of nozzles (8) at a periphery (3b) of the drum (3) is rotatably arranged about a vertical rotational axis (3a), wherein a stroboscope (19), a camera (20) and an illumination (21) are arranged in a monitoring chamber (16) in such a way that they are directed towards the periphery (3b) of the drum (3) with the nozzles (8), having the method steps of
| | |
|---|---|
| (S1) | emitting light pulses from the stroboscope (19) to the periphery (3b) of the rotating drum (3) with the nozzles (8) and adjusting the frequency of the light pulses based on a rotational frequency of the drum (3) and synchronizing with it; |
| (S2) | capturing a synchronized and thus apparently stationary image sequence of the drum (3) including a respective nozzle jet (9) of the associated nozzle (8) by means of the camera (20); and |
| (S3) | comparing the image sequence captured by the camera (20) with previously stored image sequences and evaluating the captured image sequence on the basis of the comparison for monitoring the nozzle (8), |
**characterized in that,** in the method step of capturing (S2), a frequency of the light pulses of the stroboscope which deviates slightly from the rotational frequency of the drum is selected in order to allow the image sequence of the drum (3) generated by the camera (20), which is now no longer synchronized, to move on to the next nozzle (8) in order to successively capture images of all nozzles (8) of the drum (3) in each case.

14. Method according to claim 13, **characterized in that** in the method step comparing and evaluating (S3), an image-recognizing software is used, wherein in the event of a change in one or more nozzle jets (9) of one or more nozzles (8) an output for automatically influencing the nozzle centrifuge (1) and/or a display for an operator takes place.

15. Method according to claim 13 or 14, **characterized in that** an assignment of a nozzle jet (9) to a nozzle (8) and an identification of the nozzles (8) are carried out unambiguously by means of a corresponding number or marking applied to or engraved on the drum (3) or also by means of a matching symbol next to the respective nozzle (8).

16. Method according to one of claims 13 to 15, **characterized in that** in the method step of capturing, the illumination (21) is additionally used to enhance an image capture.

17. Method according to one of claims 13 to 16, **characterized in that,** in the method step of capturing, a cleaning device (25) of the nozzle monitoring device (15) is additionally used to enhance an image capture.

18. Method according to one of the claims 13 to 17, **characterized in that** a rapid and automatic capturing carried out in the method steps of capturing, comparison and evaluation is used to suspend a solids supply to the nozzle centrifuge (1).

## Revendications

1. Centrifugeuse à buses (1), en particulier séparateur à buses, comportant un caisson (2) dans lequel un tambour (3) comportant un nombre défini de buses (8) sur une périphérie (3b) du tambour (3) est disposé avec possibilité de rotation autour d'un axe de rotation vertical (3a) et un dispositif de surveillance des buses (15), dans lequel au moins une partie du dispositif de surveillance des buses (15) est en contact avec un espace intérieur du caisson (2), dans lequel le dispositif de surveillance des buses (15) comporte au moins un capteur et une unité de commande (24), dans lequel le dispositif de surveillance des buses (15) est conçu comme un moniteur de buses optique comprenant au moins un stroboscope (19) et au moins une caméra (20), dans lequel l'au moins une caméra (20) forme l'au moins un capteur, **caractérisée en ce que** le dispositif de surveillance des buses (15) est disposé sur ou dans le caisson (2), le stroboscope (19), la caméra (20) et un éclairage (21) dépassant en partie dans une partie supérieure de caisson (2a) à travers des ouvertures d'une paroi de caisson du caisson (2) dans celle-ci ou étant entièrement disposés dans cette partie supérieure de caisson (2a) et étant dirigés vers la périphérie (3b) du tambour (3) munie des buses (8).

2. Centrifugeuse à buses (1) selon la revendication 1, **caractérisée en ce qu'**un hublot (18) forme au moins une partie du dispositif de surveillance des buses (15) qui est en contact avec l'espace intérieur du caisson (2).

3. Centrifugeuse à buses (1) selon la revendication 2, **caractérisée en ce qu'**une chambre de surveillance (16) est disposée sur ou dans une partie supérieure de caisson (2a) du caisson (2) au-dessus de la périphérie (3b) du tambour (3) munie des buses (8), l'au moins un stroboscope (19), l'au moins une caméra (20) et l'éclairage (21) étant placés dans la chambre de surveillance (16).

4. Centrifugeuse à buses (1) selon la revendication 3, **caractérisée en ce que** le stroboscope (19), la caméra (20) et l'éclairage (21) sont disposés dans la chambre de surveillance (16) de façon à être orientés vers la périphérie (3b) du tambour (3) munie des buses (8) à travers le hublot (18).

5. Centrifugeuse à buses (1) selon l'une des revendications précédentes, **caractérisée en ce qu'**un numéro ou un marquage correspondant ou un symbole approprié est appliqué ou gravé sur le tambour (3) pour chaque buse (8).

6. Centrifugeuse à buses (1) selon l'une des revendications 3 à 5, **caractérisée en ce que** l'au moins un stroboscope (19), l'au moins une caméra (20) et l'éclairage (21) sont disposés dans la chambre de surveillance (16) au-dessus du hublot (18), le hublot (18) étant placé dans une ouverture de la chambre de surveillance (16).

7. Centrifugeuse à buses (1) selon l'une des revendications 3 à 5, **caractérisée en ce que** l'au moins une caméra (20) et l'éclairage (21) sont disposés dans la chambre de surveillance (16) au-dessus du hublot (18), le hublot (18) étant placé dans une ouverture de la chambre de surveillance (16) et l'au moins un stroboscope (19) étant disposé à l'extérieur de la chambre de surveillance (16).

8. Centrifugeuse à buses (1) selon l'une des revendications 2 à 7, **caractérisée en ce que** le hublot (18) est conçu comme un hublot rotatif (18) muni d'un entraînement de hublot (18a).

9. Centrifugeuse à buses (1) selon la revendication 8, **caractérisée en ce que** l'unité de commande (24) du dispositif de surveillance des buses (15) commande l'entraînement de hublot (18a), l'au moins un stroboscope (19), l'au moins une caméra (20) et l'éclairage (21).

10. Centrifugeuse à buses (1) selon la revendication 9, **caractérisée en ce que** l'au moins une caméra (20) est connectée à une fonction d'analyse (20d) de l'unité de commande (24), laquelle fonction d'analyse (20d) reconnaît et analyse des images acquises par l'au moins une caméra (20) au moyen d'un logiciel de reconnaissance d'images.

11. Centrifugeuse à buses (1) selon l'une des revendications précédentes, **caractérisée en ce que** le dispositif de surveillance des buses (15) comporte au moins une installation de nettoyage (25).

12. Centrifugeuse à buses (1) selon l'une des revendications précédentes, **caractérisée en ce que** la centrifugeuse à buses (1) est une centrifugeuse à buses (1) fonctionnant en continu.

13. Procédé pour la surveillance de buses (8) d'une centrifugeuse à buses (1) avec un dispositif de surveillance des buses (15), dans lequel la centrifugeuse à buses (1) comporte un caisson (2) dans lequel un tambour (3) comportant un nombre défini de buses (8) sur une périphérie (3b) du tambour (3) est disposé avec possibilité de rotation autour d'un axe de rotation vertical (3a), dans lequel un stroboscope (19), une caméra (20) et un éclairage (21) sont disposés dans une chambre de surveillance (16) de façon à être dirigés vers la périphérie (3b) du tambour (3) munie des buses (8), comprenant les étapes de procédé suivantes :
| | |
|---|---|
| (S1) | émission d'impulsions lumineuses par le stroboscope (19) vers la périphérie (3b) munie des buses (8) du tambour (3) en rotation et ajustement de la fréquence des impulsions lumineuses à l'aide d'une fréquence de rotation du tambour (3) et synchronisation avec celle-ci ; |
| (S2) | acquisition au moyen de la caméra (20) d'une séquence d'images du tambour (3) synchronisées et ainsi apparemment immobiles, y compris d'un jet de buse (9) correspondant à la buse (8) en question ; et |
| (S3) | comparaison de la séquence d'images acquises par la caméra (20) avec des séquences d'images enregistrées précédemment et analyse de la séquence d'images acquises à l'aide de la comparaison en vue de la surveillance de la buse (8), |
**caractérisé en ce que**, dans l'étape d'acquisition du procédé (S2), une fréquence des impulsions lumineuses du stroboscope légèrement différente de la fréquence de rotation du tambour est choisie afin de laisser passer la séquence d'images du tambour (3) générée avec la caméra (20), qui n'est alors plus synchronisée, sur la buse (8) suivante pour acquérir successivement en continu des images de toutes les buses (8) du tambour (3).

14. Procédé selon la revendication 13, **caractérisé en ce que** l'étape de comparaison et d'analyse (S3) du procédé utilise un logiciel de reconnaissance d'images, avec émission d'une sortie pour influencer automatiquement la centrifugeuse à buses (1) et/ou d'une indication pour un opérateur en cas de changement d'un ou plusieurs jets de buse (9) d'une ou plusieurs buses (8).

15. Procédé selon la revendication 13 ou 14, **caractérisé en ce qu'**une association sans équivoque d'un jet de buse (9) à une buse (8) et une reconnaissance des buses (8) sont réalisées par un numéro ou un marquage correspondant ou un symbole approprié appliqué ou gravé sur le tambour (3) à côté de la buse (8).

16. Procédé selon l'une des revendications 13 à 15, **caractérisé en ce que**, dans l'étape d'acquisition du procédé, l'éclairage (21) est utilisé en complément pour améliorer la reconnaissance d'images.

17. Procédé selon l'une des revendications 13 à 16, **caractérisé en ce que**, dans l'étape d'acquisition du procédé, une installation de nettoyage (25) du dispositif de surveillance des buses (15) est utilisée en complément pour améliorer la reconnaissance d'images.

18. Procédé selon l'une des revendications 13 à 17, **caractérisé en ce qu'**une acquisition rapide et automatique est utilisée dans les étapes d'acquisition, de comparaison et d'analyse du procédé pour arrêter un apport de solides à la centrifugeuse à buses (1).
